# EUROPEAN PATENT APPLICATION

(11) **EP 4 044 397 A1**
(43) Date of publication of application: **17.08.2022**
(21) Application number: 20931032.5
(22) Date of filing: 04.09.2020
(51) Int. Cl.: H02J 7/04, B60L 53/16

(54) **ADAPTIVE CHARGING SYSTEM, CHARGING METHOD, AND IDENTIFICATION METHOD**

(30) Priority: 17.04.2020 CN 202010305748
(71) Applicant: Jiangyin Sinbon Electronics Co., Ltd., Jiangyin Wuxi Jiangsu 214400 (CN)
(72) Inventor: ZHANG, Xuefeng, Jiangyin, Jiangsu 214400 (CN)
(74) Representative: Proi World Intellectual Property GmbH
(86) International application number: PCT/CN2020/113502
(87) International publication number: WO 2021/208338

(57) **Abstract**

A self-adaptive charging system, a charging method, and an identification method are disclosed in the present invention. The self-adaptive charging method comprises: identifying the information about the maximum output current allowed by a charging plug and executing: if the maximum output current is greater than the maximum charging current required by the charged equipment, cutting off the current supply to the charged equipment; and if the maximum output current is less than or equal to the maximum charging current required by the charged equipment, supplying current to the charged equipment. The present invention can automatically distinguish the household sockets and the industrial sockets in different countries, and then control the guiding control signal output of the charging current to enable the switching of the maximum output current allowed in a charging system and ensure charging safety.

## Description

### Technical Field

The present invention relates to the technical field of electric vehicle charging, and particularly relates to a self-adaptive charging system, a charging method, and a method for identifying the type of an AC charging plug.

### Background Art

The specs of domestic and industrial sockets are different all over the world, and the allowable maximum output currents are also different. For a portable EV charging pile, a user is required to set the charging current which may causes some setting error, resulting in the hidden danger of over-temperature which may cause fire disaster in severe cases.

Therefore, it is an urgent need on how to provide a new type of charging system and method.

### Summary of the Invention

An embodiment of the present invention provides a self-adaptive charging system, a charging method, and an identifying method for solving the problem of excessive charging current which causes over-temperature or fire disaster.

In an embodiment, A method for identifying a type of an AC charging plug is provided,and an identification resistance is provided in a circuit of an AC charging plug. method comprises the following steps:establishing a resistance code chart where voltage values of different identification resistance correspond to differenttypes of the AC charging plug;collecting a voltage value of the identification resistance; andquerying the resistance code chart to acquire a type of the AC charging plug corresponding to the voltage value.

In a preferred embodiment, the voltage value of the identification resistance is collected multiple times, and a median or mean value is queried in resistance code chart.

In a preferred embodiment, in the resistance code chart, the voltage value is selected from 0.3V∼2.86V.

In a preferred embodiment, a difference value between two adjacent voltage values in the resistance code chart is 0.23V.

In a preferred embodiment, the resistance code chart is traversed, and the plug type is determined when the voltage value of the identification resistance is the same as or closest to the voltage value in the resistance code chart.

In a preferred embodiment, different types of AC charging plugs allow different maximum charging currents, respectively.

In an embodiment, a self-adaptive charging method includes: identifying information about a maximum output current allowed by a charging plug and sending current information to charged equipment; and the charged equipment adjusts a maximum receiving current so that the maximum receiving current is not less than the maximum output current allowed by the charging plug.

Preferably, the self-adaptive charging method further comprises acquiring the maximum receiving current information of the charged equipment, and executing: cutting off current supply to the charged equipment if the maximum output current is greater than the maximum charging current required by the charged equipment; and supplying current to the charged equipment if the maximum output current is less than or equal to the maximum charging current required by the charged equipment.

In a preferred embodiment, the self-adaptive charging method further comprises identifying whether the charging plug is used in an IT grid system. If yes, disable the grounding detection function; if not, enable the grounding detection function.

In a preferred embodiment, the self-adaptive charging method further comprises identifying whether the charging plug is used in a three-phase power supply. If yes, three-phase power supply detection and protection is enabled; if not, single-phase power supply detection and protection is enabled.

In a preferred embodiment, the self-adaptive charging method further comprises identifying whether the charging plug is a communication plug. If yes, disable the charging function and enable the communication function; if not, enable the charging function and disable the communication function.

In a preferred embodiment, according to the self-adaptive charging method, an identification resistance is provided in a circuit of an AC charging plug, and different types of AC charging plugs respectively allow different maximum charging currents, wherein an identification method for information about the maximum output current allowed by the charging plug comprises: establishing a resistance code chart where a voltage value of the identification resistance is in one-to-one correspondence to the AC charging plug type; collecting the voltage value of the identification resistance; and querying a resistance code chart to acquire the AC charging plug type corresponding to the voltage value.

In a preferred embodiment, according to the self-adaptive charging method, the voltage value of the identification resistance is sampled multiple times, and a median or mean value is taken for the resistance code chart query.

In a preferred embodiment, in the resistance code chart, the voltage value is selected from 0.3V~2.86V

In a preferred embodiment, a difference value between two adjacent voltage values in the resistance code chart is 0.23V

In a preferred embodiment, according to the self-adaptive charging method, the resistance code chart is traversed, and the plug type is determined when the voltage value of acquired identification resistance is the same as or closest to the voltage value in the resistance code chart.

In another aspect, a self-adaptive charging system is disclosed. The self-adaptive charging system comprising a plug assembly, a control box, and an AC charger electrically connected in sequence. The control box identifies information about allowable maximum output current by a plug assembly and sends said information to charged equipment. The charged equipment adjusts a maximum receiving current so that the maximum receiving current is not less than the maximum output current allowed by the charging plug.

In a preferred embodiment, according to the self-adaptive charging system, the control box receives information about the maximum receiving current adjusted by the charged equipment, and executes: cutting off current supply to the charged equipment if the maximum output current is greater than the maximum charging current required by the charged equipment; and supplying current to the charged equipment if the maximum output current is less than or equal to the maximum charging current required by the charged equipment.

In a preferred embodiment, the plug assembly comprises a charging plug and a switching device electrically connected to the charging plug. An identification resistance is provided in the switching device, and different types of AC charging plugs respectively allow different maximum charging currents. The method for identifying the information about the maximum output current allowed by the charging plug includes: establishing a resistance code chart where a voltage value of the identification resistance is in one-to-one correspondence to the AC charging plug type; collecting the voltage value of the identification resistance; and querying a resistance code chart to acquire the AC charging plug type corresponding to the voltage value.

In a preferred embodiment, the switching device is detachably electrically connected to the control box.

In a preferred embodiment, the control box is provided therein with a voltage-divider resistance connected in series with the identification resistance, a voltage-acquisition device for acquiring voltage information about the divider resistance, and a processing module for processing the voltage information about the voltage-divider resistance to acquire a voltage value of the identification resistance.

In a preferred embodiment, the voltage value of the identification resistance is sampled multiple times, and a median or mean value is taken for the resistance code chart query.

In a preferred embodiment, in the resistance code chart, the voltage value is selected from 0.3V∼2.86V

In a preferred embodiment, a difference value between two adjacent voltage values in the resistance code chart is 0.23V

In a preferred embodiment, the resistance code chart is traversed, and the plug type is determined when the voltage value of acquired identification resistance is the same as or closest to the voltage value in the resistance code chart.

In a preferred embodiment, the switching device further comprises a computer-connectable port.

In a preferred embodiment, the processing module identifies whether the charging plug is an IT grid system. If yes, disable the grounding detection function; if not, enable the grounding detection function.

In a preferred embodiment, the processing module identifies whether the charging plug is a three-phase power supply. If yes, three-phase power supply detection and protection is enabled; if not, single-phase power supply detection and protection is enabled.

In a preferred embodiment, in the self-adaptive charging system, the processing module identifies whether the charging plug is a communication plug. If yes, disable the charging function and enable the communication function; if not, enable the charging function and disable the communication function.

Compared with the prior art, the present invention can automatically distinguish the household sockets and the industrial sockets in different countries, and then control the signal output of the charging current to enable the switching of the maximum output current allowed in a charging system and ensure the charging safety.

### Brief Description of the Drawings

In order to explain the embodiments of the present invention or the technical scheme in the prior art more clearly, the following will briefly introduce the drawings that need to be used in the description of the embodiments or the prior art. Obviously, the drawings in the following description are merely some embodiments recorded in the present invention. For those of ordinary skills in the art, other drawings can be obtained based on these drawings without creative efforts.
Fig. 1 is a schematic view of a principle of a self-adaptive charging system in an implementation mode of the present invention;
Fig. 2 is a schematic view of a circuit acquired by an identification resistance voltage in an implementation mode of the present invention;
Fig. 3 is a flowchart of a self-adaptive charging method in an implementation mode of the present invention.

### Detailed Description of the Invention

The present invention will be understood more fully from the following specific implementation mode when read in conjunction with the accompanying drawings. Detailed embodiments of the present invention are disclosed herein. It should be understood, however, that the disclosed embodiments are merely exemplary of the present invention, which can be embodied in various forms. Therefore, specific functional details disclosed herein are not to be interpreted as limiting, but merely as a basis for the claims and as a representative basis for teaching one skilled in the art to variously employ the present invention in virtually any appropriately detailed embodiment.

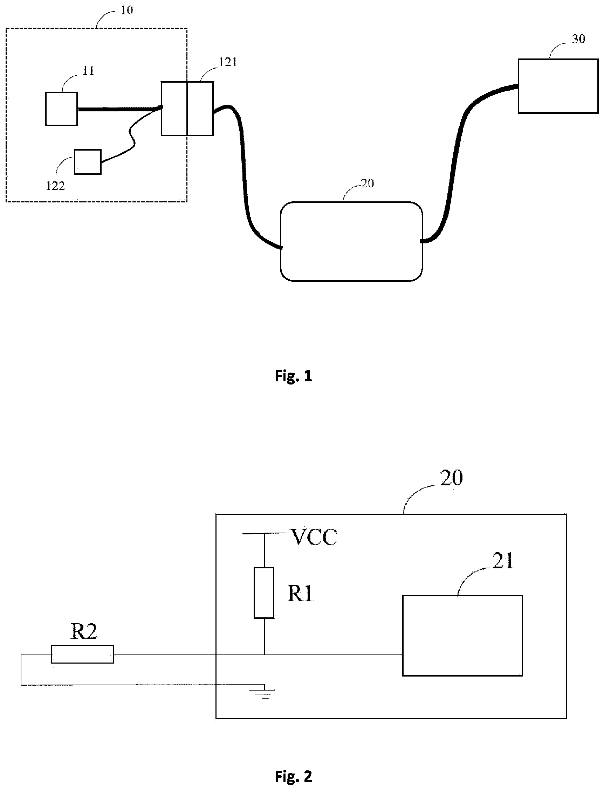

Referring to Fig. 1, in an embodiment of the present invention, a self-adaptive charging system disclosed herein comprises a plug assembly 10, a control box 20, and an ACcharger 30 electrically connected in sequence.

The plug assembly 10 is designed for connecting to an AC power supply terminal, and comprises a charging plug 11 and a switching device electrically connected to the charging plug. The switching device is arranged on an AC input line.

The switching device has a switching port 121, and accordingly, the control box 20 is provided with a plug that can be electrically connected to the switching port 121.

In an embodiment, the plug assembly 10 as a whole can be detachably connected to the control box so that plug assemblies having different plug types can be replaced as required. For example, by selecting an assembly with different plug types according to different national or regional, household or industrial, or power requirements, there is no need to replace the control box and the AC charging plug which are relatively expensive. In this embodiment, the plug types can be divided into twelve types, namely, single-phase 6A/8A/10A/14A/16A/24A/40A, single-phase IT system 10A/16A, three-phase 16A, three-phase IT system 16A, and a communication plug.

In an embodiment, the plug assembly 10 may include a housing (not shown) with the charging plug protruding from the outside of the housing or connected to the housing by a cable. The switching port 121 is provided on the side face of the housing.

In an embodiment, the control box 20 and the ACcharger30 are integrated, and the two are connected by a cable and are not detachable.

One of the main innovations of the present inventionis that the control box 20 can identify the allowable maximum output current information of the plug assembly 10, i. e. the control box 20 can identify the type of a plug assembly. Different types can correspond to different countries or regions, power supply systems, household or industrial, thereby identifying the allowable maximum current output.

In order to identify the allowable maximum output current of the plug assembly 10, in an embodiment, in connection with Fig.2, an identification resistance R2 is provided in the switching device. Avoltage-divider resistance R1 in series with the identification resistance R2, a voltage-acquisition device, and a processing module 21 are provided in the control box 20.

In an embodiment, the voltage-acquisition device is provided integrally with the processing module 21. The processing module 21 may include a microprocessor (MCU), which may include a central processing unit (CPU), a read-only memory module (ROM), a random access memory module (RAM), a timing module, a digital-to-analog conversion module (A/D converter), and a complex number input/output port. Of course, the processing module 21 may also take other forms of integrated circuits, such as application-specific integrated circuits (ASIC) or field-programmable gate arrays (FPGA), etc.

The voltage-acquisition device can directly acquire and obtain the voltage information about the divider resistance R1 after the plug assembly is powered on. The identification resistance R2 and the divider resistance R1 are both fixed-value resistances and are in a series relationship. Therefore, processing module 21 can indirectly obtain the voltage value of the identification resistance R2 through calculation.

The processing module 21 also establishes a resistance code chart with a one-to-one correspondence between the voltage value of the identification resistance R2 and the type of the AC charging plug. After obtaining the voltage value of the identification resistance R2, the AC charging plug type corresponding to the voltage value can be acquired by querying the resistance code chart.

In a specific embodiment, the identification resistance is R2 and the voltage-divider resistance is R1, then the weak voltage acquired in the control box is (R2/(R1+R2))^{∗}VCC, which is identified as nation A with a household socket. if the identification resistance is R2' and the divider resistance is R1, the weak voltage acquired in the control box will be (R2'/(R1+ R2'))^{∗}VCC, which is identified as nation B with an industrial socket.

In an embodiment, in order to improve the accuracy of the sampled data, the voltage value of the resistance can be sampled and identified multiple times. Through filtering processing, the median or mean value is taken to query the resistance code chart.

In an embodiment, in the resistance code chart, the voltage value is selected from 0.3V~2.86V.

In an embodiment, in the resistance code chart, the difference value between two adjacent voltage values is 0.23V

In an embodiment, the resistance code chart is traversed. The plug type is determined when the voltage value of the acquired and identified resistance is the same as or closest to the voltage value in the resistance code chart.

After acquiring the information about the maximum output current allowed by the AC charging plug, the processing module 21 transmits the information to the to-be-charged equipment via the AC charger so that the equipment makes a corresponding adjustment. For example, the to-be-charged equipment makes adjustments so that the maximum receiving current is no less than the maximum output current allowed by the charging plug.

In addition, after acquiring the information about the maximum output current allowed by the AC charging plug, the processing module 21 can also make the control box itself perform charging protection adapted to the maximum output current. Specifically, if the maximum output current is greater than the maximum charging current required by the charged equipment, the current supply to the charged equipment is cut off; if the maximum output current is less than or equal to the maximum charging current required by the charged equipment, current supply to the charged equipment is performed. The processing module 21 may also manage some other protection parameters, such as overcurrent, voltage, frequency, etc.

In an embodiment, the switching device may also provide a port 122 connectable to an external computer for program upgrade, fault information reading, charging information reading, etc.

In an embodiment, after acquiring the information about the maximum output current allowed by the AC charging plug, the processing module 21 also needs to determine whether the charging plug is an IT grid system, whether the charging plug is a three-phase power supply, and whether the charging plug is a communication plug in sequence. Wherein: the grounding detection function is disabled when the charging plug is an IT grid system; if not, the grounding detection function is enabled. When the charging plug is a three-phase power supply, three-phase power supply detection and protection is enabled; if not, single-phase power supply detection and protection is enabled. If the charging plug is a communication plug, the charging function is disabled and the communication function is enabled; if not, the charging function is enabled and the communication function is disabled.

The AC charger 30 is used for charging charged equipment, such as a EV automobile, and can also communicate with the charged equipment. For example, the control box transmits information about the maximum output current of the identification resistance to the charged equipment. If the maximum output current is greater than the maximum charging current required by the charged equipment, the charged equipment can adjust the maximum receiving current so that it is not less than the maximum output current allowed by the charging plug. Meanwhile, in order to realize the charging protection, the control box may receive the information about the maximum charging current required by the charged equipment, and cut off the current supply to the charged equipment when the maximum output current is greater than the maximum charging current required by the charged equipment.

In view of the foregoing, according to one aspect of the present invention, the charging plug and the switching device comprise one assembly which is replaceable, different assemblies corresponding to different plug types and the allowed maximum output current. The assembly is a replaceable device, which can be replaced with a matching AC plug according to the requirements of the location and region where it is used to meet the socket requirements of power supply systems with different specifications in various countries.

According to another aspect of the present invention, different assemblies have different identification parameters to facilitate the identification of the control box. The control box identifies different assemblies by presetting identification parameters corresponding to the different assemblies, and then transmits the information about the maximum output current allowed by the assembly type to the equipment end to be charged so that the equipment end receiving charging makes a corresponding adjustment.

According to a further aspect of the present invention, the control box itself can also make charging protection adapted to the maximum output current.

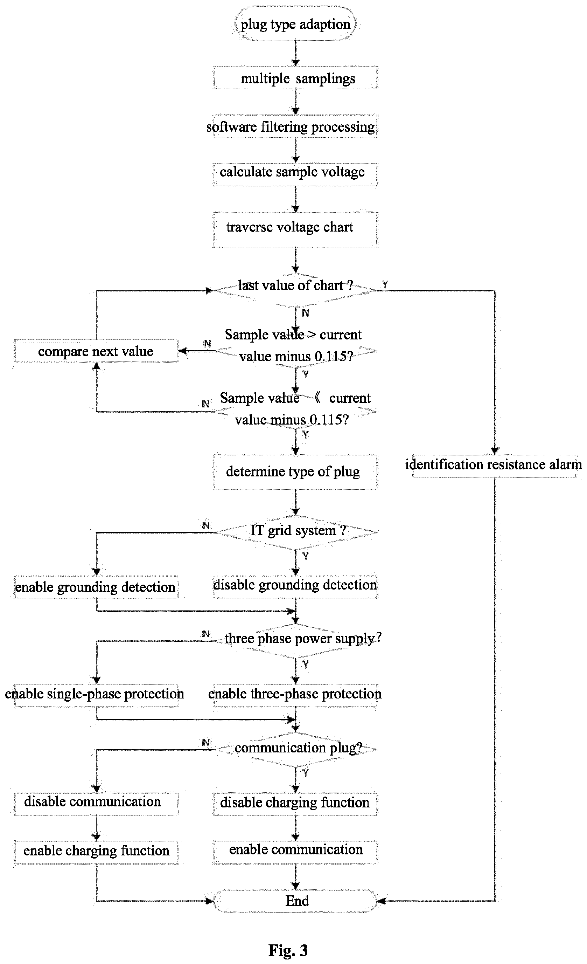

In an embodiment of the present invention, illustrated in conjunction with Fig. 3, a self-adaptive charging method is disclosed, comprising: identifying the information about the maximum output current allowed by a charging plug and executing:
(1) cutting off the current supply to charged equipment if the maximum output current is greater than the maximum charging current required by the charged equipment; and
(2) supplying current to the charged equipment if the maximum output current is less than or equal to the maximum charging current required by the charged equipment.

An identification resistance is provided in a circuit of an AC charging plug, and different types of AC charging plugs respectively allow different maximum charging currents. The method for identifying the information about the maximum output current allowed by the charging plug comprises: establishing a resistance code chart where the voltage value of identification resistance is in one-to-one correspondence to the AC charging plug type; collecting the voltage value of the identification resistance; and querying a resistance code chart to acquire the AC charging plug type corresponding to the voltage value.

In an embodiment, the voltage value of the resistance is identified by multiple samplings, and the median or mean value is taken for the resistance code chart query.

In an embodiment, in the resistance code chart, the voltage value is selected from 0.3V~2.86V

In an embodiment, in the resistance code chart, the difference value between two voltage values of adjacent sizes is 0.23V

In an embodiment, the resistance code chart is traversed. The plug type is determined when the voltage value of the acquired and identified resistance is the same as or closest to the voltage value in the resistance code chart. For example: setting twelve values in the resistance code chart corresponding to twelve different types of plugs. The minimum voltage value is 0.3V, the maximum voltage value is 2.86V, and the voltage difference value is 0.23V.Then, a query is performed in the resistance code chart successively from smallest value to largest value. If the sampled voltage value is greater than the presentvoltage-value of the resistance code chart -0.115V, and is less than or equal to the next voltage-value of the resistance code chart -0.115V, the type of the plug is determined by the present voltage value. If not so, comparing the next value in the resistance code chart; and if the voltage value satisfying the condition cannot be found after traversing, an identification resistance abnormal alarm is given.

In an embodiment, the following is further included: sending information about the maximum output current allowed by the identified charging plug to the charged equipment.

In an embodiment, after confirming the plug type, it is also necessary to identify whether the charging plug is connected to an IT grid system. If yes, disable the grounding detection function; if not, enable the grounding detection function.

In an embodiment, after the IT grid system identification is completed, it further comprises identifying whether the charging plug is connected to a three-phase power supply. If yes, three-phase power supply detection and protection is enabled; if not, single-phase power supply detection and protection is enabled.

In an embodiment, after the identification of the three-phase power supply is completed, it further comprises identifying whether the charging plug is a communication plug. If yes, disable the charging function and enable the communication function; if not, enable the charging function and disable the communication function.

The charging system of the present invention has a simple and ingenious structure, and can automatically distinguish the allowed maximum output current of household sockets and industrial sockets in different countries, and then control the guiding control signal output of the charging current so as to switch the charging current in the charging system and ensure the safety of charging, and at the same time can perform some over-voltage protection, etc. Specifically: after identifying the type and power of the plug and then knowing the maximum output current thereof, the control box sends a data signal of the maximum output current that can be supplied by the present portable charging pile to equipment receiving charging, such as an automobile, via an AC charging plug. If the charging current required by the automobile exceeds the maximum output current, the control box can cut off the supply of the AC charging plug to the automobile charging via an over-current protection setting, etc. If the charging current required by the automobile is less than or equal to the maximum output current, the control box switches the charging current in the charging system to control the ACcharger to charge the automobile in a normal state. Therefore, the present invention can not only flexibly replace and identify a plug according to needs, but also ensure the charging process safe, adaptable and practical, making it particularly suitable for the safe charging of electric automobiles and like which are promoted in many countries.

The aspects, embodiments, features, and examples of the present invention are to be considered in all respects as illustrative and not restrictive, the scope of the present invention being defined only by the claims. Other embodiments, modifications, and uses will be apparent to those skilled in the art without departing from the spirit and scope of the present invention as claimed.

The use of the terms "include", "includes", "including", "have", "has", or "having" are generally to be construed as open-ended and non-limiting unless specifically stated otherwise.

The use of the singular form herein includes the plural form (and vice versa) unless specifically stated otherwise. Furthermore, the singular forms "a", "an", and "the" include plural forms unless the context clearly dictates otherwise. Further, where the term "about" is used before a quantity value, the present teachings also include the specific quantity value itself unless specifically stated otherwise.

It should be understood that the order of steps or the order for executing specific actions is not critical so long as the present teachings remain operable. Furthermore, two or more steps or actions may be performed simultaneously.

## Claims

1. A method for identifying a type of an AC charging plug,wherein an identification resistance is provided in a circuit of an AC charging plug, **characterized in that** the method comprises the following steps:
establishing a resistance code chart where voltage values of differentidentification resistance correspond to differenttypes of the AC charging plug;
collecting a voltage value of the identification resistance; and
querying the resistance code chart to acquire a type of the AC charging plug corresponding to the voltage value.

2. The method for identifying a type of an AC charging plugaccording to claim 1, **characterized in that** the voltage value of the identification resistance is collectedmultiple times, and a median or mean value is queried in the resistance code chart.

3. The method for identifying a type of an AC charging plugaccording to claim 1, **characterized in that** in the resistance code chart, the voltage value is selected from 0.3V∼2.86V.

4. The method for identifying a type of an AC charging plugaccording to claim 1, **characterized in that** a difference value between two adjacent voltage values in the resistance code chart is 0.23V.

5. The method for identifying a type of an AC charging plugaccording to claim 1, **characterized in that** the resistance code chart is traversed, and the plug type is determined when the voltage value of acquired identification resistance is the same as or closest to the voltage value in the resistance code chart.

6. The method for identifying a type of an AC charging plugaccording to claim 1, **characterized in that** different types of AC charging plugs allow different maximum charging currents, respectively.

7. A self-adaptive charging method, **characterized by** comprising:
identifying information on a maximum output current allowed by a charging plug and sending theinformation to a charged equipment; and
the charged equipment adjusting a maximum receiving current so that the maximum receiving current is not less than amaximum output current allowed by the charging plug.

8. The self-adaptive charging method according to claim 7, characterized in thatthe method further comprises: acquiring information onmaximum receiving current of the charged equipment;
if the maximum output current is greater than the maximum charging current required by the charged equipment, cutting off current supply to the charged equipment; and
if the maximum output current is less than or equal to the maximum charging current required by the charged equipment, supplying themaximum output current to the charged equipment

9. The self-adaptive charging method according to claim 7, **characterized by** further comprising: identifying whether the charging plug is adedicated plug for IT grid system,
if yes, disabling grounding detection function; and
if not, enabling grounding detection function.

10. The self-adaptive charging method according to claim 7, **characterized by** further comprising: identifying whether the charging plug is aplugfor three-phase power supply.
if yes, enabling three-phase power supply detection and protection;and
if not, enabling single-phase power supply detection and protection.

11. The self-adaptive charging method according to claim 7, **characterized by** further comprising identifying whether the charging plug is a communication plug,
if yes, disabling charging function and enabling communication function; and
if not, enabling the charging function and disabling the communication function.

12. The self-adaptive charging method according to claim 7, **characterized in that** an identification resistance is provided in a circuit of an AC charging plug, and different types of AC charging plugs allow different maximum charging currents respectively, wherein a method for identifying a type of an AC charging plug,comprises the following steps:
establishing a resistance code chart where voltage values of different identification resistance correspond to differenttypes of the AC charging plug;
collecting a voltage value of the identification resistance; and
querying the resistance code chart to acquire a type of the AC charging plug corresponding to the voltage value.

13. The self-adaptive charging method according to claim 12, **characterized in that** the voltage value of the identification resistance is collected multiple times, and a median or mean value is queried in the resistance code chart.

14. The self-adaptive charging method according to claim 12, **characterized in that** in the resistance code chart, the voltage value is selected from 0.3V~2.86V

15. The self-adaptive charging method according to claim 12, **characterized in that** a difference value between two adjacent voltage values in the resistance code chart is 0.23V.

16. The self-adaptive charging method according to claim 12, **characterized in that** the resistance code chart is traversed, and the plug type is determined when the voltage value of acquired identification resistance is the same as or closest to the voltage value in the resistance code chart.

17. A self-adaptive charging system, **characterized by** comprising a plug assembly, a control box, and an ACcharger electrically connected in sequence,
wherein the control box identifies information on allowable maximum output current of the plug assembly and sends said information to charged equipment; and
the charged equipment adjusts a maximum receiving current so that the maximum receiving current is not less than the allowable maximum output current of the plug assembly.

18. The self-adaptive charging system according to claim 17, **characterized in that** the control box further receives information on the maximum receiving current adjusted by the charged equipment, and executes:
cutting off current supply to the charged equipment if the maximum output current is greater than the maximum charging current required by the charged equipment; and
supplying current to the charged equipment if the maximum output current is less than or equal to the maximum charging current required by the charged equipment.

19. The self-adaptive charging system according to claim 17, **characterized in that** the plug assembly comprises a AC charging plug and a switching device electrically connected to the AC charging plug, and **in that** an identification resistance is provided in the switching device, and different types of AC charging plugs allow different maximum charging currentsrespectively, wherein amethod for information about the maximum output current allowed by the charging plug comprises:
establishing a resistance code chart where voltage values of different identification resistance correspond to different types ofAC charging plug, respectively;
collecting the voltage value of the identification resistance; and
querying the resistance code chart to acquire the AC charging plug type corresponding to the voltage value.

20. The self-adaptive charging system according to claim 19, **characterized in that** the switching device is detachably electrically connected to the control box.

21. The self-adaptive charging system according to claim 19, **characterized in that** the control box is provided therein with:
a voltage-divider resistance connected in series with the identification resistance;
a voltage-acquisition device for acquiring voltage information on the divider resistance; and
a processing module for processing the voltage information on the voltage-divider resistance to acquire a voltage value of the identification resistance.

22. The self-adaptive charging system according to claim 19, **characterized in that** the voltage value of the identification resistance is collected multiple times, and a median or mean value is queried in the resistance code chart.

23. The self-adaptive charging system according to claim 19, **characterized in that** in the resistance code chart, the voltage value is selected from 0.3V∼2.86V.

24. The self-adaptive charging system according to claim 19, **characterized in that** a difference value between two adjacent voltage values in the resistance code chart is 0.23V.

25. The self-adaptive charging system according to claim 19, **characterized in that** the resistance code chart is traversed, and plug type is determined when the voltage value of acquired identification resistance is the same as or closest to the voltage value in the resistance code chart.

26. The self-adaptive charging system according to claim 19, **characterized in that** the switching device further comprises a computer-connectable port.

27. The self-adaptive charging system according to claim 17, **characterized in that** the control box identifies whether the charging plug is connected to an IT grid system,
if yes, disabling grounding detection function;and
if not, enabling grounding detection function.

28. The self-adaptive charging system according to claim 17, **characterized in that** the control box identifies whether the charging plug is connected to a three-phase power supply,
if yes, enabling three-phase power supply detection and protection;and
if not, enabling single-phase power supply detection and protection.

29. The self-adaptive charging system according to claim 17, **characterized in that** the control box identifies whether the charging plug is a communication plug,
if yes, disabling charging function and enabling communication function;and
if not, enabling the charging function and disabling the communication function.
